# EUROPÄISCHE PATENTSCHRIFT

(11) **EP 3 560 044 B1**
(45) Veröffentlichungstag und Bekanntmachung des Hinweises auf die Patenterteilung: **24.03.2021**
(21) Anmeldenummer: 17804527.4
(22) Anmeldetag: 22.11.2017
(51) Int. Cl.: H01R 12/73, H01R 13/24, H01R 13/504, H01R 13/52, H01R 43/18, H01R 13/405, H01R 43/24, H01R 13/53, H01R 107/00, G01D 11/24, H01B 17/30

(54) **TRANSMITTERGEHÄUSE MIT DARIN EINGESETZTEN VERBINDUNGSELEMENT**
TRANSMITTER HOUSING HAVING CONNECTING ELEMENT INSERTED THEREIN
BOÎTIER ÉMETTEUR MUNI D'UN L'ÉLÉMENT DE CONNEXION INSÉRÉ DEDANS

(30) Priorität: 22.12.2016 DE 102016125350
(43) Veröffentlichungstag der Anmeldung: 30.10.2019
(73) Patentinhaber: Endress+Hauser SE+Co. KG, 79689 Maulburg (DE)
(72) Erfinder: TANNER, Jürgen, 79400 Kandern (DE); LAIS, Michael, 79677 Wembach (DE); REICHERT, Philipp, 79585 Steinen-Hägelberg (DE)
(74) Vertreter: Andres, Angelika Maria
(86) Internationale Anmeldenummer: PCT/EP2017/080076
(87) Internationale Veröffentlichungsnummer: WO 2018/114196

(56) Entgegenhaltungen:
- DE-A1-102012 005 638
- DE-A1-102012 108 415
- DE-T5-112014 002 233
- FR-A1- 2 930 683
- JP-A- H1 064 616
- JP-A- 2000 133 370
- JP-A- 2014 032 784

## Beschreibung

Die Erfindung betrifft ein Transmittergehäuse mit einem darin eingesetzten Verbindungselement zum elektrischen Verbinden zweier elektrischer Baugruppen, die in diesem Transmittergehäuse eines Feldgeräts der Automatisierungstechnik angeordnet sind. Das Verbindungselement umfasst metallische Leiterelemente und einen die Leiterelemente umgebenden Isolierkörper.

In der Automatisierungstechnik werden Feldgeräte zur Bestimmung und/oder Überwachung von Prozessgrößen eingesetzt. Als Feldgeräte werden im Rahmen der vorliegenden Anmeldung im Prinzip alle Messgeräte bezeichnet, die prozessnah eingesetzt werden und die prozessrelevante Informationen liefern oder verarbeiten. Dabei handelt es sich beispielsweise um Füllstandsmessgeräte, Durchflussmessgeräte, Druck- und Temperaturmessgeräte, pH-Redoxpotentialmessgeräte, Leitfähigkeitsmessgeräte, usw., welche die entsprechenden Prozessgrößen Füllstand, Durchfluss, Druck, Temperatur, pH-Wert bzw. Leitfähigkeit erfassen. Solche Feldgeräte werden in unterschiedlichen Ausgestaltungen von der E+H Gruppe hergestellt und vertrieben.

Die Feldgeräte weisen dabei eine in einem Transmittergehäuse des Feldgeräts angeordnete Transmittereinheit auf. Die Transmittereinheit weist in der Regel eine eine erste elektrischen Baugruppe umfassende Auswerteeinheit sowie eine eine zweite Baugruppe umfassende Anschlusseinheit auf. Die Auswerteeinheit dient der Erzeugung eines die Prozessgröße repräsentierenden elektrischen Signals, wie beispielsweise einer Spannung und/oder eines Stroms. Die Anschlusseinheit dient dem Anschluss von äußeren Zuleitungen, beispielsweise zur Energieversorgung des Feldgeräts und/oder der Weiterleitung der von der Auswerteeinheit erzeugten elektrischen Signale.

Derartige Feldgeräte, die auch in explosionsgefährdeten Bereichen betrieben werden sollen, müssen darüber hinaus auch sehr hohen Sicherheits-anforderungen hinsichtlich des Explosionsschutzes genügen. Dabei geht es im Besonderen darum, die Bildung von Funken sicher zu vermeiden oder zumindest sicherzustellen, dass ein im Fehlerfall entstandener Funke keine Auswirkungen auf die Umgebung hat. Hierfür sind entsprechenden Normen in dazugehörigen Schutzklassen definiert. In der Schutzklasse mit dem Namen "Eigensicherheit" (Ex-i) wird der Explosionsschutz dadurch erzielt, dass die Werte für eine elektrischen Größe (Strom, Spannung, Leistung) zu jeder Zeit jeweils unterhalb eines jeweils vorgegebenen Grenzwertes liegen, damit auch im Fehlerfall kein Zündfunken erzeugt wird. In der weiteren Schutzklasse mit dem Namen "Erhöhte Sicherheit" (Ex-e) wird der Explosionsschutz dadurch erzielt, dass die räumlichen Abstände zwischen zwei verschiedenen elektrischen Potentialen so groß sind, dass eine Funkenbildung auch im Fehlerfall aufgrund der Distanz nicht auftreten kann.

In einer Vielzahl von Fällen ist es erwünscht, die erste und die zweite Baugruppe räumlich getrennt voneinander in dem Transmittergehäuse anzuordnen. Dies erfordern beispielsweise die oben erwähnten Schutzklassen zum Explosionsschutz. Zum anderen kann bei der räumlichen Trennung zum Beispiel die Elektronikeinheit in einem Elektronikraum und die Anschlusseinheit in einem davon durch eine Zwischenwand getrennten Anschlussraum untergebracht werden. Dadurch ist die im Elektronikraum untergebrachte erste Baugruppe gegen bewusste oder ungewollte Manipulationen, insbesondere Berührungen, geschützt, falls an die in dem Anschlussraum untergebrachte zweite Baugruppe eine Leitung oder ein Kabel angeschlossen wird. Durch die räumliche Trennung kann zudem der Anschlussraum auch unter für die im Elektronikraum angeordnete, erste Baugruppe kritischen Umweltbedingungen (beispielsweise bei einer hohen Feuchtigkeit oder bei Niederschlag) geöffnet werden, ohne dass die erste Baugruppe dabei Schaden nimmt.

Zur elektrischen Verbindung (auch: Durchführung) der voneinander räumlich durch eine Zwischenwand getrennten Baugruppen wird ein durch die Zwischenwand hindurchragendes Verbindungselement benötigt, welches Leiterelemente und ein die Leiterelemente umgebendes Isoliermaterial aufweist. In der DE 10 2012 108 415 A1 ist beispielsweise eine als Verbindungselement dienende Schnittstelle zwischen einer Sensoreinheit und einem explosionsfesten Gehäuse angegeben. In der europäischen Patentanmeldung EP 1 130 363 A1 ist ein insbesondere flammendurchschlagsicheres Verbindungselement angegeben. Nachteilig an den im Stand der Technik offenbarten Verbindungselementen ist, dass diese hervorstehende Kontaktstifte aufweisen, welche prinzipiell auf Berührungen empfindlich sind, da sie beispielswiese bei einem Öffnen des Anschlussraumes verbogen werden können.

Daher ist es von Vorteil, die Leiterelemente in einen im Wesentlichen die Form des Verbindungselements bestimmenden Isolierkörper derart einzubetten, dass sich gegenüberliegende Endabschnitte der Leiterelemente mittels in den Isolierkörper eingebrachter Aussparungen kontaktierbar sind. Bei der Ausgestaltung des Isolierkörpers, insbesondere der Wahl des Isoliermaterials, zeigt sich folgende Problematik: An den Isolierkörper werden einerseits hohe Anforderungen an die Formbeständigkeit gestellt. Aufgrund des hohen Elastizitätsmoduls eigenen sich zum Beispiel keramische Materialen hervorragend als Material für den Isolierkörper. Andererseits können starke mechanische Belastungen auftreten, beispielsweise verursacht durch große Drehmomente bei der Montage und/oder bei Arbeiten im geöffneten Anschlussraum im Bereich der Zwischenwand zwischen Anschluss- und Elektronikraum. In diesem Fall erweist sich, beispielsweise im Bereich einer Zwischenwand, die geringe Zugfestigkeit und das Sprödbruchverhalten keramischer Materialen als problematisch. Zudem kann es erforderlich sein, dass der Isolierkörper dazu geeignet ist, den Anschlussraum und den Elektronikraum gegeneinander im Bereich einer Zwischenwand abzudichten; hierfür ist ein Isolierkörper mit sehr kleinen Elastizitätsmodulen erforderlich. Die aus dem Stand der Technik bekannten Verbindungselemente mit einheitlichen Isolierkörpern bzw. Isolierungen können diese unterschiedlichen und zum Teil gegensätzlichen Anforderungen an den Isolierkörper nicht erfüllen.

Die DE 11 2014 002233 T5 zeigt ein Verbindungselement mit einem äußeren harten Gehäuse und einem inneren weiches Gehäuse.

Die JP 2000 133370 A zeigt ein Verbindungselement mit einem Isolierkörper-Zwischensegment aus einem Dichtmaterial.

Die DE102012005638 A1 offenbart ein Transmittergehäuse mit einem Verbindungselement und zwei Baugruppen.

Der Erfindung liegt die Aufgabe zugrunde, ein Transmittergehäuse und ein darin eingesetztes Verbindungselement mit einem Isolierkörper anzugeben, die eine sichere und stabile elektrische Verbindung von zwei in voneinander getrennten Räumen des Transmittergehäuse angeordneten elektrischen Baugruppen ermöglichen.

Die Aufgabe wird gelöst durch in Transmittergehäuse gemäß Anspruch 1.

Das in die Aufnahme eingesetzte Verbindungselement ist dazu ausgestaltet, die erste und die zweite Baugruppe miteinander elektrisch zu verbinden.

Das Verbindungselement umfasst wenigstens zwei im Wesentlichen stabförmige metallische Leiterelemente. Selbstverständlich kann das Verbindungselement auch mehrere derartige Leiterelemente (beispielweise vier oder acht) umfassen. Jedes der stabförmigen Leiterelemente weist dabei zwei sich gegenüberliegende Endabschnitte auf. Die Leiterelemente sind in einem definierten Abstand zueinander, insbesondere parallel zueinander, angeordnet sind. Das Verbindungselement umfasst einen die Leiterelemente umgebenden und gegeneinander elektrisch isolierenden mehrgliedrigen Isolierkörper. Erfindungsgemäß ist der Isolierkörper aus zwei jeweils aus zumindest einem ersten Kunststoff bestehenden Isolierkörper-Endsegmenten und einem aus einem vom ersten Kunststoff verschiedenen zweiten Kunststoff bestehenden Isolierkörper-Zwischensegment gebildet ist. Das Isolierkörper-Zwischensegment ist in einer Längsrichtung des mehrgliedrigen Isolierkörpers zwischen den Isolierkörper-Endsegmenten angeordnet. In die Isolierkörper-Endsegmente sind jeweils an einem dem Zwischensegment abgewandten Endbereich (EB) des Isolierkörper-Endsegments derart Aussparungen eingeformt, dass jeweils eine Kontaktfläche an jedem der Endabschnitte eines jeden Leiterelementes mittels der Aussparungen elektrisch kontaktierbar ist.

Der zumindest eine erste Kunststoff weist einen Elastizitätsmodul auf, welcher größer als der Elastizitätsmodul des zweiten Kunststoffs ist.

Im Rahmen der Erfindung ist in dem Elektronikraum eine erste Leiterplatte mit der darauf angeordneten ersten Baugruppe und in dem Anschlussraum eine zweite Leiterplatte mit der darauf angeordneten zweiten Baugruppe angeordnet. Auf der ersten Leiterplatte und der zweiten Leiterplatte sind jeweils Federkontaktstifte angeordnet. Das in die Aufnahme eingesetzte Verbindungselement ist dazu ausgestaltet ist, mit seinen Kontaktflächen auf die Federkontaktstifte derart zu pressen, dass die von dem ersten der beiden Isolierkörper-Endsegmente umgebenen Endabschnitte mit den auf der ersten Leiterplatte angeordneten Federkontaktstiften elektrisch verbunden sind, und dass die von dem zweiten der beiden Isolierkörper-Endsegmente umgebenen Endabschnitte mit den auf der zweiten Leiterplatte angeordneten Federkontaktstiften elektrisch verbunden sind.

In einer Ausgestaltung ist das Verbindungselement in die Aufnahme reversibel einsetzbar.

Die Vorteile der erfindungsgemäßen Lösung sind die folgenden:
- Die Leiterelemente des Verbindungselements sind vorteilhaft vollständig in den Isolierkörper eingebettet. Das Verbindungselement weist damit keine aus dem Isolierkörper hervorstehenden Kontaktstifte auf. Stattdessen können die Kontaktflächen der Endabschnitte der Leiterelemente mittels der Aussparungen in den vom Isolierkörper-Zwischensegment abgewandten Endbereichen der Isolierkörper-Endsegmente elektrisch kontaktiert werden. Dabei kann für jeden Endabschnitt eines jeden Leiterelements eine separate Aussparung vorgesehen sein. Alternativ können auch zwei, mehrere, oder alle an Endabschnitte, die am gleichen Endbereich des Isolierkörper-Endsegments angeordnet sind, über eine gemeinsame Aussparung kontaktierbar sein.
- Der Isolierkörper des Verbindungselements ist dabei einerseits formbeständig, da der erste Kunststoff für die Isolierkörper-Endsegmente einen großen, insbesondere größeren Elastizitätsmodul als der zweite Kunststoff, aufweist. Die Stabilität der Isolierkörper-Endsegmente wird daher durch die Aussparungen im Endbereich nicht beeinträchtigt.
- Andererseits weist der Isolierkörper in seinem Zwischensegment den zweiten, elastischeren Kunststoff auf, der sich damit unter mechanischen Spannungen einfacher verformen lässt. Durch den mehrgliedrigen Isolierkörper kann das Verbindungselement in ein Transmittergehäuse derart eingesetzt werden, dass das Isolierkörper-Zwischensegment sich beispielweise im Bereich einer Zwischenwand befindet. Der zweite Kunststoff mit dem geringem Elastizitätsmodul eignet sich dabei hervorragend als ein Dichtelement, mit dem beispielsweise ein Elektronikraum und ein Anschlussraum, die durch die Zwischenwand voneinander getrennt sind, flüssigkeitsdicht gegeneinander isoliert sind.
- Die Stabilität des ganzen Verbindungselements wird dabei zusätzlich noch durch die stabförmigen, im Wesentlichen parallel zueinander angeordneten, Leiterelemente verstärkt, die vorteilhaft alle parallel zu der Längsrichtung des Isolierkörpers angeordnet sind.
- Die beiden voneinander verschiedenen Kunststoffe des mehrgliedrigen Isolierkörpers können in einem Zwei-Komponenten-Spritzgussverfahren um die Leiterelemente gespritzt werden. Damit ist das Verbindungselement besonders einfach herstellbar. Gegebenenfalls können die beiden Isolierkörper-Endsegmente noch durch einen Steg bzw. durch eine oder mehrere Streben aus dem ersten Kunststoff miteinander verbunden sein.

Insbesondere umgibt das erste Isolierkörper-Endsegment alle ersten der jeweils zwei Endabschnitte der insbesondere im Wesentlichen parallel zueinander angeordneten Leiterelemente, während das zweite Isolierkörper-Endsegment alle zweiten, den ersten Endabschnitten gegenüberliegende Endabschnitte der insbesondere im Wesentlichen parallel zueinander angeordneten Leiterelemente umgibt. Dadurch ist die durch die Segmente (d.h. Isolierkörper-Endsegmente und Isolierkörper-Zwischensegment) definierte Längsrichtung des Isolierkörpers auch parallel zu allen im Wesentlichen parallel zueinander angeordneten Leiterelementen.

In einer Ausgestaltung ist der Elastizitätsmodul des ersten Kunststoffs um zumindest einen Faktor 5 größer als der Elastizitätsmodul des zweiten Kunststoffs. Beispielsweise ist der Elastizitätsmodul des zweiten Kunstoffs kleiner als 0,3 GPa (Giga Pascal), während der Elastizitätsmodul des ersten Kunstoffs größer als 1,5 GPa ist.

In einer Ausgestaltung ist der Elastizitätsmodul des ersten Kunststoffs um zumindest einen Faktor 10 größer als der Elastizitätsmodul des zweiten Kunststoffs.

In einer Ausgestaltung sind beide Isolierkörper-Endsegmente aus demselben ersten Kunststoff.

In einer Ausgestaltung weist der erste Kunststoff ein Polyamid und/oder ein Polyimid auf.

In einer Ausgestaltung weist der der zweite Kunststoff ein Elastomer auf. Insbesondere handelte es sich um ein thermoplastisches Elastomer.

In einer Ausgestaltung sind die Leiterelemente aus einer zumindest Messing und/oder Kupfer enthaltenden Legierung gebildet.

In einer Ausgestaltung sind die Endabschnitte der Leiterelemente mit einer Korrosionsschutzschicht überzogen. Insbesondere ist die Korrosionsschutzschicht aus Gold.

An der Querschnitt der stabförmigen Leiterelemente herrschen dabei keine Einschränkungen: Er kann rechteckförmig, insbesondere quadratisch, aber auch rund, insbesondere kreisrund oder oval oder elliptisch sein. Die stabförmigen Leiterelemente können als im Wesentlichen starre Leiterelemente ausgebildet sein. Dadurch wird die Stabilität des Verbindungselements erhöht.

In einer Ausgestaltung weisen die stabförmigen Leiterelemente jeweils eine für alle Leiterelemente gleiche Länge und einen für alle Leiterelemente gleichen Querschnitt auf.

In einer Ausgestaltung handelt es sich um einen rechteckförmigen, Querschnitt mit einer Dicke und Breite, wobei die Breite zumindest 1,5-mal die Dicke und die Länge zumindest 10-mal die Dicke beträgt.

In einer Ausgestaltung beträgt die Dicke zumindest 0,5 mm, die Breite zumindest 1 mm und die Länge zumindest 10 mm.

Das Verbindungselement kann gegebenenfalls zusätzlich konform zu einer der vorgenannten Normen (Ex-i und/oder Ex-e) ausgebildet ist,
insbesondere in Bezug auf den Abstand, die Legierung, die Länge, Breite und/oder die Dicke der Leiterelemente, und/oder in Bezug auf den ersten und den zweiten Kunststoff des Isolierkörpers.

In einer Ausgestaltung sind die Leiterelemente an zumindest einem ihrer Endabschnitte, insbesondere in einem rechten Winkel, abgewinkelt.

In einer Ausgestaltung sind die Leiterelemente an allen Endabschnitten abgewinkelt, die in demselben Isolierkörper-Endsegment angeordnet, d.h. an alle an einem Endbereich des Isolierkörpers angeordnete Endabschnitte sind abgewinkelt.

In einer Ausgestaltung sind alle Endabschnitte abgewinkelt.

Die Ausgestaltung der in den Endbereichen eingeformten Aussparung zur Kontaktierung der Kontaktfläche des Endabschnitts ist daran angepasst, ob der Endabschnitt oder die Endabschnitte abgewinkelt sind oder nicht. Im Falle eines, insbesondere in einem rechten Winkel, abgewinkelten Endabschnittes ist die Ebene der Kontaktfläche am Endabschnitt nicht mehr parallel zu der Längsrichtung, sondern insbesondere im Wesentlichen senkrecht zu der Längsrichtung. In diesem Fall ist die Kontaktfläche jeweils über eine Aussparung kontaktierbar, die sich in einer zu der Längsrichtung parallelen Richtung erstreckt. Im Falle eines nicht-abgewinkelten Endabschnitts ist die Ebene der Kontaktfläche parallel zur Längsrichtung. In diesem Fall ist die Kontaktfläche jeweils über eine Aussparung kontaktierbar, die sich in einer zu der Längsrichtung senkrechten Richtung erstreckt. Für den Fall, dass sich die Kontaktfläche auf dem abgewinkelten Endabschnitte befindet, ist es von Vorteil, dass der abgewinkelte Abschnitt des Endabschnitts ungefähr so groß wie die Breite des Leiterelementes ist und insbesondere um nicht mehr 20% von der Breite des Leiterelementes abweicht. Im Falle abgewinkelter Leiterelemente befinden sich die Kontaktflächen auf dem abgewinkelten Abschnitt.

In einer Ausgestaltung weist das Isolierkörper-Zwischensegment in Längsrichtung ein kleineres Ausmaß auf als jedes der Isolierkörper-Endsegmente. Insbesondere ist jedes der Isolierkörper-Endsegmente um zumindest 20% länger als das Isolierkörper-Zwischensegment.

In einer Ausgestaltung weist der Isolierkörper in einer zu der Längsrichtung senkrechten Richtung ein größeres Ausmaß auf als die Dicke der Leiterelemente. Insbesondere ist das Ausmaß zumindest einen Faktor 2 größer.

In einer Ausgestaltung weist das Isolierkörper-Zwischensegment in einer zu der Längsrichtung des Isolierkörpers senkrechten Richtung ein größeres Ausmaß auf als die Isolierkörper-Endsegmente, vorzugsweise als ein an das Isolierkörper-Zwischensegment angrenzender Bereich der Isolierkörper-Endsegmente.

In einer Ausgestaltung des Transmittergehäuses ist das Verbindungselement derart in die Aufnahme eingesetzt, dass die Längsrichtung des Isolierkörpers im Wesentlichen senkrecht zu der Zwischenwand angeordnet ist, wobei das Isolierkörper-Zwischensegment des eingesetzten Verbindungselements dazu ausgestaltet ist, den Elektronikraum und den Anschlussraum flüssigkeitsdicht gegeneinander abzudichten. Das Isolierkörper-Zwischensegment dient also als Dichtelement für die durch die Aufnahme unterbrochene Zwischenwand.

In einer Ausgestaltung des erfindungsgemäßen Transmittergehäuses sind die Aufnahme und das Verbindungselement derart ausgestaltet, dass das Verbindungselement in einer definierten Einbaulage in die Aufnahme einsetzbar ist, oder dass das Verbindungselement in zumindest zwei definierten, vorzugsweise zueinander symmetrischen Einbaulagen, in die Aufnahme einsetzbar ist, wobei die zwei Einbaulagen zu derselben elektrischen Verbindung der beiden elektrischen Baugruppen führen.
Bei der Symmetrie handelt es sich zum Beispiel um eine Spiegelsymmetrie, dessen Symmetrieachse insbesondere parallel zu der Längsrichtung ist. Dadurch gestaltet sich das Einsetzen des Verbindungselements in das Transmittergehäuse besonders einfach bzw. das Verbindungselements kann nicht falsch herum eingesetzt werden.

In einer Ausgestaltung sind die Federkontaktstifte aufgelötet.

In einer Ausgestaltung weisen die Aussparungen eine Tiefe auf, die jeweils derart auf die Federkontaktstifte abgestimmt ist, dass die Federkontaktstifte jeweils mit einem Großteil ihrer Länge, insbesondere im Wesentlichen vollständig, in die Endbereiche der Isolierkörper-Endsegmente hineinragen. Als Länge der Federkontaktstifte wird hierbei die Ausdehnung bezeichnet, welche sich in eine senkrechte Richtung der Leiterplatte, auf die die Federkontaktstifte aufgebracht sind, erstreckt. Damit ist eine besonders platzsparende Anordnung erreicht.

Das Verbindungselement kann zum Beispiel in einem Verfahren zur Herstellung eines Verbindungselements hergestellt werden, umfassend zumindest die Schritte: Vorfertigung der Leiterelemente; Einbettung der Leiterelemente in den Isolierkörper mittels zumindest eines Spritzgussverfahrens.

Beispielsweise werden in einem ersten Spritzgussverfahren die beiden Isolierkörper-Endsegmente um die Leiterelemente gespritzt und in einem zweiten Spritzgussverfahren, insbesondere zeitlich nachfolgend zu dem ersten Spritzgussverfahren, wird das Isolierkörper-Zwischensegment um die Leiterelemente gespritzt. Damit wird das Isolierkörper-Zwischensegment zwischen die Isolierkörper-Endsegmente gespritzt.

Die Erfindung wird anhand der nachfolgenden Figuren näher erläutert, wobei gleiche Bezugszeichen gleiche Merkmale bezeichnen; wenn es die Übersichtlichkeit erfordert oder es anderweitig sinnvoll erscheint, wird auf bereits erwähnte Bezugszeichen in nachfolgenden Figuren verzichtet. Es zeigt:
Fig. 1: Eine Explosionsdarstellung des erfindungsgemäßen Verbindungselements;
Fig. 2a,b: Perspektivische Ansichten von Ausgestaltungen verwendeter Verbindungselemente;
Fig. 3: Eine erfindungsgemäßes Transmittergehäuse mit einem darin eingesetztem Verbindungselement.
Fig. 4: Ein Verfahren zur Herstellung des Verbindungselements.

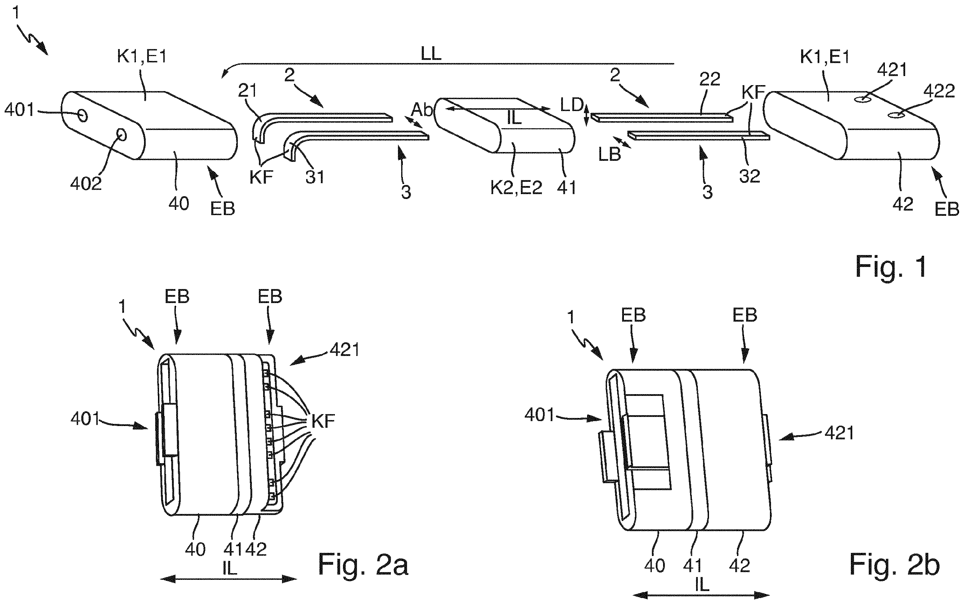

Fig. 1 zeigt in einer Explosionsdarstellung einer Ausgestaltung eines Verbindungselements 1 mit einem ersten stabförmigen Leiterelement 2 und einem zweiten stabförmigen Leiterelement 3. Die beiden Leiterelemente sind in einem Abstand Ab parallel zueinander angeordnet, und weisen eine gleiche Länge LL, eine gleiche Dicke LD und eine gleiche Breite LB auf. Die Leiterelemente 2,3 sind in der Explosionsdarstellung als unterbrochen dargestellt, sind aber selbstverständlich durchgehend und bestehen jeweils auf einem einzigen, stabförmigen Leiterelement 2,3.

Das erste Leiterelement 2 weist einen ersten Endabschnitt 21 auf, welcher in einem rechten Winkel abgewinkelt ist und einen dem ersten Endabschnitt 21 gegenüberliegenden zweiten Endabschnitt 22, welcher nicht abgewinkelt ist. Auch das zweite Leiterelement 3 weist einen ersten Endabschnitt 31 auf, welcher in einem rechten Winkel abgewinkelt ist und einen dem ersten Endabschnitt 31 gegenüberliegenden zweiten Endabschnitt 32, welcher nicht abgewinkelt ist. An den Endabschnitten 21,22,31,32 befinden sich jeweils die Kontaktflächen KF, welcher zur elektrischen Kontaktierung vorgesehen sind.

Im Falle abgewinkelter Leiterelemente 2,3 befinden sich die Kontaktflächen KF auf dem abgewinkelten Abschnitt.

Die Leiterelemente sind von einem in seiner Längsrichtung IL mehrgliedrigen Isolierkörper mit mehreren Isolierkörper-Segmenten 40,41,42 umgeben. Die Längsrichtung IL ist dabei im Wesentlichen parallel zu der Längsrichtung der stabförmigen Leiterelemente 2,3. Der mehrgliedrige Isolierkörper setzt sich in seiner Längsrichtung IL zusammen aus: einem ersten Isolierkörper-Endsegment 40 aus einem ersten Kunststoff K1 mit einem ersten Elastizitätsmodul E1, einem Isolierkörper-Zwischensegment 41 mit aus einem zweiten Kunststoff mit einem 10-mal kleinerem Elastizitätsmodul E2, und aus einem zweiten Isolierkörper-Endsegment 42, wiederum aus dem erstem Kunststoff K1. Die Kontaktflächen KF der Leiterelemente 2,3 sind mittels in die Isolierkörper-Endsegmente 40,42 eingeformter Aussparungen 401,402,421,422 kontaktierbar. Dabei kann wie im hier gezeigten Fall für jeden Endabschnitt 31,21,22,32 eines jeden Leiterelements 2,3, eine separate Aussparung 401,402,421,422 vorgesehen sein.

Alternativ kann auch nur an jedem der beiden Endbereiche EB der Isolierkörper-Endsegmente 40,42 eine einzige Aussparung 401,421 vorgesehen sein, mittels der alle Kontaktflächen KF aller Leiterelemente 2,3 kontaktierbar sind. Eine weitere Möglichkeit ist, dass die Aussparungen 401,402 zumindest einen gemeinsamen Abschnitt aufweisen. Dies ist in Fig. 2a oder 2b gezeigt, in welchen weitere Ausführungsbeispiele des Verbindungselementes 1 in einer perspektivischen Ansicht dargestellt sind.

Wie auch schon in dem in Fig.1 gezeigten Fall sind dabei in Fig. 2a alle Endabschnitte 21,31, ... der Leiterelemente 2,3,... abgewinkelt, die an dem Endbereich EB des ersten Isolierkörper-Endsegments 40 angeordnet und dort von ihm umgeben sind. Alle Endabschnitte 22,32, ... die an dem Endbereich EB des zweiten Isolierkörper-Endsegments 42 angeordnet und dort von ihm umgeben sind, sind dagegen nicht abgewinkelt. Daher erstreckt sich hier (vgl. Fig. 1) die Aussparung 421 in einer zur Längsrichtung IL senkrechten Richtung.

Im Unterschied zu dem Ausführungsbeispiel aus Fig. 1 sind die Kontaktflächen KF hier mittels einer für alle an einem Endbereich EB angeordneten Endabschnitte 21,22; 31,32 abschnittsweise gemeinsamen Aussparung 401; 402 kontaktierbar. Insbesondere für den Fall, dass eine Vielzahl von Leiterelementen 2,3, (in diesem Fall acht Stück) vorgesehen sind, kann es vorteilhaft sein, jeweils an jedem der beiden Endbereiche EB nur eine gemeinsame Aussparung 401,421 oder Aussparungen 401,421 mit einem gemeinsamen Abschnitt vorzusehen.

Ein zu Fig. 2a ähnliches Ausführungsbeispiel ist in Fig. 2b gezeigt, wobei hier alle Endabschnitte 21,22,31,32 abgewinkelt sind. Daher erstrecken sich in diesem Fall beide Aussparungen 401,402 in einer zu der Längsrichtung IL parallelen Richtung. Selbstverständlich ist es im Rahmen der Erfindung auch möglich, dass nur eine Auswahl von Endabschnitten 21,.. der Leiterelemente 2,3 über eine gemeinsame Aussparung 401 kontaktierbar ist, während eine andere Auswahl von Endabschnitten 31,.. über eine weitere gemeinsame Aussparung 402 kontaktierbar ist.

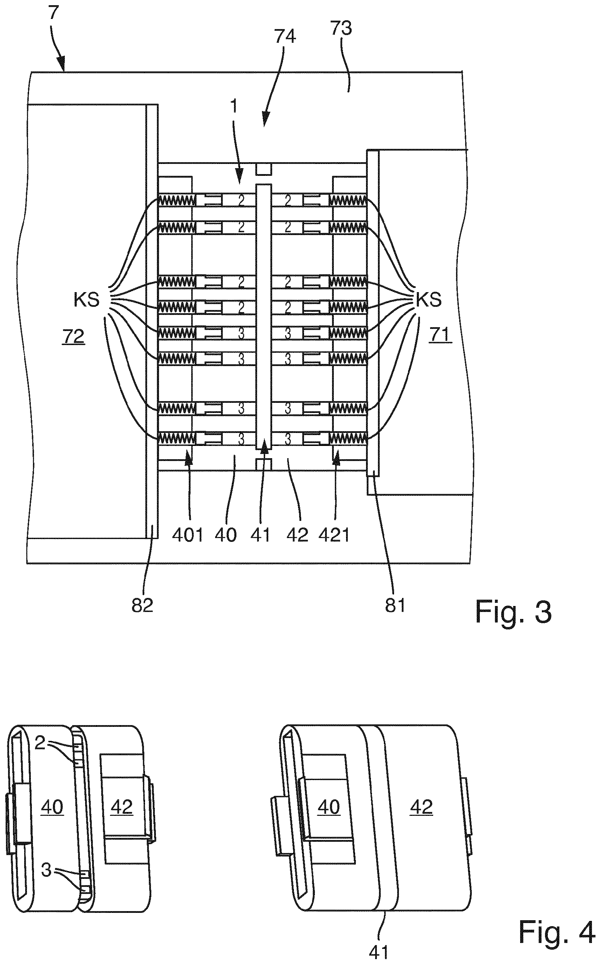

In Fig. 3 ist eine Schnittansicht eines erfindungsgemäßen Transmittergehäuses 7 mit einem in eine Aufnahme 74 eingesetzten Verbindungselement 1 gezeigt. Das Transmittergehäuse weist einen Anschlussraum 72 und einen davon durch eine Zwischenwand 73 getrennten Elektronikraum 71 auf. In dem Elektronikraum 71 sind auf eine erste Leiterplatte 81 die aus dem Stand der Technik an sich bekannten Federkontaktstifte KS (englisch: "Pogo Pins") aufgelötet. Auch in dem Anschlussraum 72 sind auf eine zweite Leiterplatte 82 weitere Federkontaktstifte KS aufgelötet. Das Verbindungselement 1 ist in dieser Ausführung ähnlich zu dem in Fig. 2b gezeigten Ausführungsbeispiel ausgestaltet, nämlich mit Leiterelementen 2,3,.. die an allen Endabschnitten 21,22,31,31,... abgewinkelt sind.

Die Federkontaktstifte KS ragen in dieser Ausgestaltung vorteilhaft vollständig in die Aussparungen 401,402 der Isolierkörper-Endsegmente 40,42 hinein, und stehen in elektrisch leitender Verbindung mit den Kontaktflächen KF (hier nicht dargestellt). Dadurch wird durch das Verbindungselement 1 einerseits die elektrische Verbindung der beiden elektrischen Baugruppen (nicht dargestellt), die jeweils auf der ersten Leiterplatte 81 und der der zweiten Leiterplatte 82 angeordnet sind, hergestellt. Andererseits werden durch das Isolierkörper-Zwischensegment 41 des Isolierkörpers der Elektronikraum 71 und der Anschlussraum 72 flüssigkeitsdicht gegeneinander abgedichtet.

Das Isolierkörper-Zwischensegment 41 dient somit gleichzeitig als ein Dichtelement für die durch die Aufnahme 74 unterbrochene Zwischenwand 73. Dies wird vorteilhaft durch das vergleichsweise niedrige Elastizitätsmodul E2 Isolierkörper-Zwischensegments 41 (hier ein Elastomer) erreicht. Zusätzlich ist das Isolierkörper-Zwischensegments 41 in einer zu der Längsrichtung IL des Isolierkörpers senkrechten Richtung größer als die Isolierkörper-Endsegmente 40,42. Dadurch wird eine optimale Abdichtung erreicht wird, da beim Einsetzten des Verbindungselements 1 auf das Isolierkörper-Zwischensegment 41 zum einen stärkere Spannungen wirken, und sich dieses zum anderen durch sein kleineres Elastizitätsmodul E2 einfacher verformen lässt die Isolierkörper-Endsegmente 40,42

Fig. 4 zeigt ein Verfahren zur Herstellung des Verbindungselementes 1, welches auch in Fig. 2b dargestellt ist. Zunächst werden die Leiterelemente 2,3 vorgefertigt (hier vier Stück); dies umfasst auch das Aufbringen der Korrosionsschutzschicht auf Gold auf die Endabschnitte 21,22,31,32,... Anschließend werden die Isolierkörper-Endsegmente 40,42 in einem ersten Schritt eines Zwei-Komponenten Spritzgussverfahrens um die Leiterelemente 2,3,.. gespritzt. Dabei sind in Isolierkörper-Endsegmente 40,42 mit einem schmalen Steg miteinander verbunden. In einem zweiten Schritt des Zwei-Komponenten Spritzgussverfahrens wird das Isolierkörper-Zwischensegment 41 zwischen die Isolierkörper-Endsegmente 40,42 um die Leiterelemente 2,3,... gespritzt.

### Bezugszeichen und Symbole

- 1: Verbindungselement
- 2,3: Leiterelement
- 21,22,31,32: Endabschnitte

- 40,42: Isolierkörper-Endsegment
- 401,402,421,422: Aussparungen der Isolierkörper-Endsegmente
- 41: Isolierkörper-Zwischensegment

- 7: Transmittergehäuse
- 71: Elektronikraum
- 72: Anschlussraum
- 73: Zwischenwand
- 74: Aufnahme
- 81,82: Leiterplatten
- K1,K2: Kunststoffe
- E1,E2: Elastizitätsmodule
- IL: Längsrichtung
- Ab: Abstand
- EB: Endbereich
- LL: Länge der Leiterelemente
- LD: Dicke der Leiterelemente
- LB: Breite der Leiterelemente
- KF: Kontaktflächen
- KS: Federkontaktstifte

## Patentansprüche

1. Transmittergehäuse (7) eines Feldgeräts der Automatisierungstechnik, mit einem in das Transmittergehäuse (7) eingesetzten Verbindungselement (1) zum elektrischen Verbinden zweier elektrischer Baugruppen, die in dem Transmittergehäuse (7) angeordnet sind,
wobei eine erste Baugruppe der beiden Baugruppen in einem Elektronikraum (71) des Transmittergehäuses (7) und die zweite Baugruppe der beiden Baugruppen in einem Anschlussraum (72) des Transmittergehäuses (7) angeordnet ist,
wobei der Elektronikraum (71) und der Anschlussraum (72) durch eine Zwischenwand (73) des Transmittergehäuses (7) voneinander getrennt sind,
wobei die Zwischenwand (73) durch eine Aufnahme (74) durchbrochen ist,
wobei in die Aufnahme (74) das Verbindungselement (1) eingesetzt ist,
und wobei das in die Aufnahme (74) eingesetzte Verbindungselement (1) dazu ausgestaltet ist, die erste Baugruppe und die zweite Baugruppe miteinander elektrisch zu verbinden,
wobei das Verbindungselement (1) umfasst:
wenigstens zwei im Wesentlichen stabförmige metallische Leiterelemente (2,3) mit jeweils zwei sich gegenüberliegenden Endabschnitten (21,22,31,32) wobei die Leiterelemente (2,3) in einem definierten Abstand (Ab) zueinander, insbesondere parallel zueinander, angeordnet sind;
sowie einen die Leiterelemente (2,3) umgebenden und gegeneinander elektrisch isolierenden mehrgliedrigen Isolierkörper, der aus zwei jeweils aus zumindest einem ersten Kunststoff (K1) bestehenden Isolierkörper-Endsegmenten (40,42) und einem aus einem vom ersten Kunststoff verschiedenen zweiten Kunststoff (K2) bestehenden Isolierkörper-Zwischensegment (41) gebildet ist,
wobei das Isolierkörper-Zwischensegment (41) in einer Längsrichtung (IL) des Isolierkörpers zwischen den Isolierkörper-Endsegmenten (40,42) angeordnet ist;
wobei in die Isolierkörper-Endsegmente (40,42) jeweils an einem dem Zwischensegment abgewandten Endbereich (EB) des Isolierkörper-Endsegments (40;42) derart Aussparungen (401,402,421,422) eingeformt sind, dass jeweils eine Kontaktfläche (KF) an jedem der Endabschnitte (21,22,31,32) eines jeden Leiterelementes (2,3) mittels der Aussparungen (401,402,421,422) elektrisch kontaktierbar ist;
wobei der erste Kunststoff (K1) einen Elastizitätsmodul (E1) aufweist, welcher größer als der Elastizitätsmodul (E2) des zweiten Kunststoffs (K2) ist,
wobei in dem Elektronikraum (71) eine erste Leiterplatte (81) mit der darauf angeordneten ersten Baugruppe und in dem Anschlussraum (72) eine zweite Leiterplatte (82) mit der darauf angeordneten zweiten Baugruppe angeordnet ist,
**dadurch gekennzeichnet, dass**
auf der ersten Leiterplatte (81) und der zweiten Leiterplatte (82) jeweils Federkontaktstifte (KS) angeordnet sind,
und wobei das in die Aufnahme (74) eingesetzte Verbindungselement (1) dazu ausgestaltet ist, mit seinen Kontaktflächen (KF) auf die Federkontaktstifte (KS) derart zu pressen,
- dass die von dem ersten (40) der beiden Isolierkörper-Endsegmente (40,42) umgebenen Endabschnitte (21,31) mit den auf der ersten Leiterplatte angeordneten Federkontaktstiften (KS) elektrisch verbunden sind, und
- dass die von dem zweiten (42) der beiden Isolierkörper-Endsegmente (40,42) umgebenen Endabschnitte (22,32) mit den auf der zweiten Leiterplatte (82) angeordneten Federkontaktstiften (KS) elektrisch verbunden sind.

2. Transmittergehäuse (7) nach Anspruch 1, wobei das Verbindungselement (1) in die Aufnahme (74) reversibel einsetzbar ist.

3. Transmittergehäuse (7) nach Anspruch 1 oder 2,
wobei der Elastizitätsmodul (E1) des ersten Kunststoffs (K1) um zumindest einen Faktor 5, insbesondere um zumindest einen Faktor 10, größer als der Elastizitätsmodul (E2) des zweiten Kunststoffs (K2) ist.

4. Transmittergehäuse (7) nach einem der vorherigen Ansprüche, wobei der erste Kunststoff (K1) ein Polyamid und/oder ein Polyimid aufweist,
und wobei der zweite Kunststoff (K2) ein Elastomer, insbesondere ein thermoplastisches Elastomer, aufweist.

5. Transmittergehäuse (7) nach einem der vorherigen Ansprüche, wobei die Leiterelemente (2,3) aus einer zumindest Messing und/oder Kupfer enthaltenden Legierung gebildet sind,
und wobei die Endabschnitte (21,22,31,32) der Leiterelemente (2,3) mit einer Korrosionsschutzschicht, insbesondere einer Korrosionsschutzschicht aus Gold, überzogen sind.

6. Transmittergehäuse (7) nach einem der vorherigen Ansprüche, wobei die Leiterelemente (2,3) jeweils eine für alle Leiterelemente (2,3) gleiche Länge (LL) und einen für alle Leiterelemente gleichen, im Wesentlichen rechteckförmigen, Querschnitt mit einer Dicke (LD) und Breite (LB) aufweisen,
wobei die Breite (LB) zumindest 1,5-mal die Dicke (LD) und die Länge (LL) zumindest 10-mal die Dicke (LD) beträgt,
wobei insbesondere die Dicke (LD) zumindest 0,5 mm, die Breite (LB) zumindest 1 mm und die Länge (LL) zumindest 10 mm beträgt.

7. Transmittergehäuse (7) nach einem der vorherigen Ansprüche, wobei die Leiterelemente (2,3) an zumindest einem ihrer Endabschnitte (21,22,31,32), insbesondere in einem rechten Winkel, abgewinkelt sind.

8. Transmittergehäuse (7) nach einem der vorherigen Ansprüche, wobei das Isolierkörper-Zwischensegment (41) in Längsrichtung (IL) des Isolierkörpers eine kleineres Ausmaß aufweist jedes der Isolierkörper-Endsegmente (40,42) .

9. Transmittergehäuse (7) nach einem der vorherigen Ansprüche, wobei der Isolierkörper in einer zu der Längsrichtung (IL) des Isolierkörpers senkrechten Richtung ein größeres Ausmaß aufweist als die Dicke (LD) der Leiterelemente (2,3), insbesondere um zumindest einen Faktor 2,
und wobei insbesondere das Isolierkörper-Zwischensegment (41) in einer zu der Längsrichtung (IL) des Isolierkörpers senkrechten Richtung ein größeres Ausmaß aufweist als die Isolierkörper-Endsegmente (40,42) vorzugsweise als ein an das Isolierkörper-Zwischensegment (41) angrenzender Bereich der Isolierkörper-Endsegmente (40,42).

10. Transmittergehäuse nach Anspruch 1,
wobei das Verbindungselement (1) derart in die Aufnahme eingesetzt ist,
dass die Längsrichtung (IL) des Isolierkörpers im Wesentlichen senkrecht zu der Zwischenwand (74) angeordnet ist,
und wobei das Isolierkörper-Zwischensegment (41) des eingesetzten Verbindungselements (1) dazu ausgestaltet ist, den Elektronikraum (71) und den Anschlussraum (72) flüssigkeitsdicht gegeneinander abzudichten.

11. Transmittergehäuse (7) nach Anspruch 1 oder 10,
wobei die Aufnahme (74) und das Verbindungselement (1) derart ausgestaltet sind, dass das Verbindungselement (1) in einer definierten Einbaulage in die Aufnahme (74) einsetzbar ist, oder
dass das Verbindungselement (1) in zumindest zwei definierten, vorzugsweise zueinander symmetrischen, Einbaulagen, in die Aufnahme (74) einsetzbar ist, wobei die zwei Einbaulagen zu derselben elektrischen Verbindung der beiden elektrischen Baugruppen führen.

12. Transmittergehäuse (7) nach einem der Ansprüche 1 bis 11, wobei auf der ersten Leiterplatte (81) und der zweiten Leiterplatte (82) jeweils die Federkontaktstifte (KS) aufgelötet sind.

13. Transmittergehäuse (7) nach einem der Ansprüche 1 bis 12, wobei die Aussparungen (401,402,421,422) eine Tiefe aufweisen, die jeweils derart auf die Federkontaktstifte (KS) abgestimmt ist, dass die Federkontaktstifte (KS) jeweils mit einem Großteil ihrer Länge, insbesondere im Wesentlichen vollständig, in die Endbereiche (EB) der Isolierkörper-Endsegmente (40,42) hineinragen.

## Claims

1. Transmitter housing (7) of a field device used in automation engineering, with a connection element (1) inserted into the transmitter housing (7), said element being designed for the electrical connection of two electrical assemblies, which are arranged in the transmitter housing (7),
wherein a first assembly of the two assemblies is arranged in an electronic compartment (71) of the transmitter housing (7) and wherein the second assembly of the two assemblies is arranged in a connection compartment (72) of the transmitter housing (7),
wherein the electronic compartment (71) and the connection compartment (72) are separated from one another by an intermediate wall (73) of the transmitter housing (7),
wherein the intermediate wall (73) is penetrated by a support (74),
wherein the connection element (1) is inserted in the support (74),
and wherein the connection element (1) inserted into the support (74) is designed to electrically interconnect the first assembly and the second assembly,
wherein the connection element (1) comprises:
at least two essentially rod-shaped metal conductor elements (2, 3), each having two opposite end sections (21, 22, 31, 32), wherein the conductor elements (2, 3) are arranged at a defined distance (Ab) to one another, particularly parallel to one another;
as well as a multi-unit insulating body that surrounds the conductor elements (2, 3) and are electrically isolating in relation to one another, said insulating body being formed, respectively, by two insulating body end segments (40, 42) made from at least a first plastic material (K1) and an insulating body intermediate segment (41) which is made from a second plastic material (K2) that is different to the first plastic material,
wherein the insulating body intermediate segment (41) is arranged in a longitudinal direction (IL) of the insulating body between the insulating body end segments (40, 42),
wherein recesses (401, 402, 421, 422) are formed in the insulating body end segments (40, 42), in each case at an end section (EB) of the insulating body end segment (40, 42) that faces away from the intermediate segment in such a way that a contact surface (KF) at each of the end sections (21, 22, 31, 32) of each conductor element (2, 3) can be contacted electrically by means of the recesses (401, 402, 421, 422);
wherein the first plastic material (K1) has an elasticity module (E1), which is greater than the elasticity module (E2) of the second plastic material (K2),
wherein a first printed circuit board (81) containing the first assembly is arranged in the electronic compartment (71) and a second printed circuit board (82) containing the second assembly is arranged in the connection compartment (72),
**characterized in that**
spring contact pins (KS) are arranged on the first printed circuit board (81) and the second printed circuit board (82),
and wherein the connection element (1) inserted into the support (74) is designed to press against the spring contact pins (KS) with its contact surfaces (KF) in such a way that
- the end sections (21, 31) surrounded by the first (40) of the two insulating body end segments (40, 42) are electrically connected to the spring contact pins (KS) arranged on the first printed circuit board, and
- the end sections (22, 32) surrounded by the second (42) of the two insulating body end segments (40, 42) are electrically connected to the spring contact pins (KS) arranged on the second printed circuit board.

2. Transmitter housing (7) as claimed in Claim 1, wherein the connection element (1) can be inserted into the support (74) in a reversible manner.

3. Transmitter housing (7) as claimed in Claim 1 or 2,
wherein the elasticity module (E1) of the first plastic material (K1) is greater than the elasticity module (E2) of the second plastic material (K2) at least by a factor of 5, particularly by at least a factor of 10.

4. Transmitter housing (7) as claimed in one of the previous claims, wherein the first plastic material (K1) features a polyamide and/or a polyimide,
and wherein the second plastic material (K2) features an elastomer, particularly a thermoplastic elastomer.

5. Transmitter housing (7) as claimed in one of the previous claims, wherein the conductor elements (2, 3) are made from an alloy containing at least brass and/or copper,
and wherein the end sections (21, 22, 31, 32) of the conductor elements (2, 3) are covered by an anticorrosion layer, particularly an anticorrosion layer made of gold.

6. Transmitter housing (7) as claimed in one of the previous claims, wherein the conductor elements (2, 3) each have a length (LL) that is equal for all the conductor elements (2, 3) and a cross-section, essentially rectangular, with a thickness (LD) and a width (LB), wherein said cross-section is equal for all the conductor elements,
wherein the width (LB) is at least 1.5 times the thickness (LD) and the length at least 10 times the thickness (LD),
wherein particularly the thickness (LD) is at least 0.5 mm, the width (LB) is at least 1 mm and the length (LL) is at least 10 mm.

7. Transmitter housing (7) as claimed in one of the previous claims, wherein the conductor elements (2, 3) are angled, particularly at a right angle, at at least one of their end sections.

8. Transmitter housing (7) as claimed in one of the previous claims, wherein in the longitudinal direction (IL) of the insulating body the insulating body intermediate segment (41) has a dimension less than each of the end segments (40, 42) of the insulating body.

9. Transmitter housing (7) as claimed in one of the previous claims, wherein in a direction perpendicular to the longitudinal direction (IL) of the insulating body the insulating body has a dimension greater than the thickness (LD) of the conductor elements (2, 3), particularly by at least a factor of 2,
and wherein, in a direction perpendicular to the longitudinal direction (IL) of the insulating body particularly the insulating body intermediate segment (41) has a dimension greater than the insulating body end segments (40, 42), preferably greater than an area of the insulating body end segments (40, 42) adjacent to the insulating body intermediate segment (41).

10. Transmitter housing (7) as claimed in Claim 1,
wherein the connection element (1) is inserted in the support in such a way that the longitudinal direction (IL) of the insulating body is arranged in an essentially perpendicular manner to the intermediate wall (74),
and wherein the insulating body intermediate segment (41) of the inserted connection element (1) is designed to seal the electronic compartment (71) and the connection compartment (72) against one another in a liquid-tight manner.

11. Transmitter housing (7) as claimed in Claim 1 or 10,
wherein the support (74) and the connection element (1) are designed in such a way that the connection element (1) can be inserted in the support (74) in a defined installation position, or in such a way that
the connection element (1) can be inserted in the support (74) in at least two defined installation positions, preferably symmetrical to one another, wherein the two installation positions lead to the same electrical connection of the two electrical assemblies.

12. Transmitter housing (7) as claimed in one of the Claims 1 to 11,
wherein the spring contact pins (KS) are soldered on the first printed circuit board (81) and the second printed circuit board (82).

13. Transmitter housing (7) as claimed in one of the Claims 1 to 12,
wherein the recesses (401, 402, 421, 422) have a depth which is coordinated with the spring contact pins (KS) in such a way that the spring contact pins (KS) project into the end sections (EB) of the insulating body end segments (40, 42) over a large part of their length, particularly essentially entirely.

## Revendications

1. Boîtier de transmetteur (7) d'un appareil de terrain de la technique d'automatisation, avec un élément de connexion (1) inséré dans le boîtier de transmetteur (7), lequel élément est destiné à la connexion électrique de deux composants électriques, qui sont disposés dans le boîtier de transmetteur (7), un premier composant parmi les deux composants étant disposé dans un compartiment électronique (71) du boîtier de transmetteur (7) et le deuxième composant parmi les deux composants étant disposé dans la zone de raccordement (72) du boîtier de transmetteur (7),
le compartiment électronique (71) et le compartiment de raccordement (72) étant séparés l'un de l'autre par une cloison (73) du boîtier de transmetteur (7),
un support (74) étant enfoncé dans la cloison (73),
un élément de connexion (1) étant inséré dans le support (74),
et l'élément de connexion (1) inséré dans le support (74) étant conçu pour interconnecter électriquement le premier composant et le deuxième composant, l'élément de connexion (1) comprenant :
au moins deux éléments conducteurs (2, 3) métalliques, pour l'essentiel en forme de tige, chacun présentant des parties d'extrémité (21, 22, 31, 32) opposées, les éléments conducteurs (2, 3) étant disposés à une distance (Ab) définie l'un de l'autre, notamment parallèlement l'un par rapport à l'autre ;
ainsi qu'un corps isolant à plusieurs sections entourant les éléments conducteurs (2, 3), lesquelles sections sont isolées électriquement les unes par rapport aux autres, lequel corps isolant est formé respectivement par deux segments d'extrémité (40, 42) de corps isolant constitués au moins d'une première matière plastique (K1) et d'un segment d'extrémité (41) de corps isolant constitué d'une deuxième matière plastique (K2) différente de la première matière plastique,
le segment d'extrémité (41) de corps isolant étant disposé dans une direction longitudinale (IL) du corps isolant entre les segments d'extrémité (40, 42) de corps isolant,
des évidements (401, 402, 421, 422) étant formés dans les segments d'extrémité (40, 42) de corps isolant, respectivement au niveau d'une partie d'extrémité (EB) du segment d'extrémité (40, 42) de corps isolant éloignée du segment intermédiaire, de telle sorte qu'une surface de contact (KF) puisse être mise en contact électrique sur chacune des parties d'extrémité (21, 22, 31, 32) de chaque élément conducteur (2, 3) au moyen des évidements (401, 402, 421, 422) ;
la première matière plastique (K1) présentant un module d'élasticité (E1), lequel est supérieur au module d'élasticité (E2) de la deuxième matière plastique (K2),
une première carte de circuit imprimé (81) contenant le premier composant étant disposée dans le compartiment électronique (71) et une deuxième carte de circuit imprimé (82) contenant le deuxième composant étant disposée dans le compartiment de raccordement (72),
**caractérisé**
**en ce que** des broches de contact à ressort (KS) sont disposées respectivement sur la première carte de circuit imprimé (81) et la deuxième carte de circuit imprimé (82),
et l'élément de connexion (1) inséré dans le support (74) étant conçu pour presser avec ses surfaces de contact (KF) sur les broches de contact à ressort (KS) de telle sorte
- que les parties d'extrémité (21, 31) entourées par le premier (40) parmi les deux segments d'extrémité (40, 42) de corps isolant sont reliées électriquement avec les broches de contact à ressort (KS) disposées sur la première carte de circuit imprimé, et
- que les parties d'extrémité (22, 32) entourées par le deuxième (42) parmi les deux segments d'extrémité (40, 42) de corps isolant sont reliées électriquement avec les broches de contact à ressort (KS) disposées sur la deuxième carte de circuit imprimé.

2. Boîtier de transmetteur (7) selon la revendication 1, pour lequel l'élément de connexion (1) est inséré de manière réversible dans le support (74).

3. Boîtier de transmetteur (7) selon la revendication 1 ou 2,
pour lequel le module d'élasticité (E1) de la première matière plastique (K1) est supérieur d'au moins un facteur 5, notamment d'au moins un facteur 10, au module d'élasticité (E2) de la deuxième matière plastique (K2).

4. Boîtier de transmetteur (7) selon l'une des revendications précédentes, pour lequel la première matière plastique (K1) présente un polyamide et/ou un polyimide,
et pour lequel la deuxième matière plastique (K2) présente un élastomère, notamment un élastomère thermoplastique.

5. Boîtier de transmetteur (7) selon l'une des revendications précédentes, pour lequel les éléments conducteurs (2, 3) sont constitués d'un alliage contenant au moins du laiton et/ou du cuivre,
et pour lequel les parties d'extrémité (21, 22, 31, 32) des éléments conducteurs (2, 3) sont recouverts d'une couche anticorrosion, notamment d'une couche anticorrosion en or.

6. Boîtier de transmetteur (7) selon l'une des revendications précédentes, pour lequel les éléments conducteurs (2, 3) présentent chacun une longueur (LL) égale pour tous les éléments conducteurs (2, 3) et une section, pour l'essentiel rectangulaire, avec une épaisseur (LD) et une largeur (LB), laquelle section est égale pour tous les éléments conducteurs,
la largeur (LB) s'élevant au minimum à 1,5 fois l'épaisseur (LD) et la longueur à au moins 10 fois l'épaisseur (LD),
boîtier pour lequel notamment l'épaisseur (LD) s'élève à au moins 0,5 mm, la largeur (LB) à au moins 1 mm et la longueur (LL) à au moins 10 mm.

7. Boîtier de transmetteur (7) selon l'une des revendications précédentes, pour lequel les éléments conducteurs (2, 3) sont coudés selon un angle droit au moins au niveau d'une de leurs parties d'extrémité.

8. Boîtier de transmetteur (7) selon l'une des revendications précédentes, pour lequel le segment intermédiaire (41) de corps isolant présente, dans la direction longitudinale (IL) du corps isolant, une dimension inférieure à chacun des segments d'extrémité (40, 42) du corps isolant.

9. Boîtier de transmetteur (7) selon l'une des revendications précédentes, pour lequel le corps isolant présente dans une direction perpendiculaire à la direction longitudinale (IL) du corps isolant une dimension supérieure à l'épaisseur (LD) des éléments conducteurs (2, 3), notamment au moins d'un facteur 2,
et boîtier pour lequel notamment le segment intermédiaire (41) de corps isolant présente dans une direction perpendiculaire à la direction longitudinale (IL) du corps isolant une dimension supérieure aux segments d'extrémité (40, 42) de corps isolant, de préférence supérieure à une zone des segments d'extrémité (40, 42) de corps isolant avoisinant le segment intermédiaire (41) de corps isolant.

10. Boîtier de transmetteur (7) selon la revendication 1,
pour lequel l'élément de connexion (1) est inséré dans le support de telle sorte que la direction longitudinale (IL) du corps isolant est disposée pour l'essentiel perpendiculairement à la cloison (74),
et pour lequel le segment intermédiaire (41) de corps isolant de l'élément de connexion (1) inséré est conçu pour sceller de façon étanche aux liquides le compartiment électronique (71) et le compartiment de raccordement (72) l'un par rapport à l'autre.

11. Boîtier de transmetteur (7) selon la revendication 1 ou 10,
pour lequel le support (74) et l'élément de connexion (1) sont conçus de telle sorte
que l'élément de connexion (1) puisse être inséré dans une position de montage définie dans le support (74), ou de telle sorte
que l'élément de connexion (1) puisse être inséré dans au moins deux positions de montage, de préférence symétriques l'une par rapport à l'autre, dans le support (74), les deux positions de montage conduisant à la même connexion électrique des deux composants électriques.

12. Boîtier de transmetteur (7) selon l'une des revendications 1 à 11,
pour lequel les broches de contact à ressort (KS) sont soudées sur la première carte de circuit imprimé (81) et la deuxième carte de circuit imprimé (82).

13. Boîtier de transmetteur (7) selon l'une des revendications 1 à 12,
pour lequel les évidements (401, 402, 421, 422) présentent une profondeur, qui est à chaque fois assortie aux broches de contact à ressort (KS), de telle sorte que les broches de contact à ressort (KS) pénètrent chacune avec une grande partie de leur longueur, notamment pour l'essentiel entièrement, dans les parties d'extrémité (EB) des segments d'extrémité (40, 42) de corps isolant.
